# EUROPEAN PATENT SPECIFICATION

(11) **EP 3 730 357 B1**
(45) Date of publication and mention of the grant of the patent: **05.10.2022**
(21) Application number: 18892118.3
(22) Date of filing: 18.12.2018
(51) Int. Cl.: B60S 5/00, F16D 65/00, F16D 55/22, B25B 27/00

(54) **ROTATION RESTRICTION MECHANISM FOR MAINTENANCE**
ROTATIONSBESCHRÄNKUNGSMECHANISMUS FÜR DIE WARTUNG
MÉCANISME DE RESTRICTION DE ROTATION POUR MAINTENANCE

(30) Priority: 21.12.2017 JP 2017244828
(43) Date of publication of application: 28.10.2020
(73) Proprietor: Ishihara, Yozo, Tsushima-shi, Aichi 496-0802 (JP)
(72) Inventor: Ishihara, Yozo, Tsushima-shi, Aichi 496-0802 (JP)
(74) Representative: Müller-Boré & Partner Patentanwälte PartG mbB
(86) International application number: PCT/JP2018/046553
(87) International publication number: WO 2019/124369

(56) References cited:
- EP-A1- 0 683 091
- JP-A- H1 151 096
- JP-A- H09 100 854
- JP-A- S60 157 001
- JP-A- 2009 001 272
- JP-U- S5 047 149
- US-A- 5 916 279
- US-B2- 7 467 530

## Description

### TECHNICAL FIELD

The present invention relates to a rotation restriction mechanism for maintenance.

### BACKGROUND ART

During maintenance of components near an axle of a vehicle, connecting parts between the axle and a differential are removed and re-inserted in some cases. Some maintenance tasks including the removal/re-insertion are performed in a state in which the vehicle is lifted by a lift for vehicle maintenance.

For example, Patent Document 1 discloses a technique related to the present invention, specifically a replacement part for a vehicle differential which is provided with a differential main body to which axles of left and right drive wheels are connected, and a ring gear mounted to the differential main body with a fastening member (e.g., a bolt), and transmits drive force from an engine to the differential main body via the ring gear. The replacement part for a vehicle differential can be exchanged with the differential main body, and is provided with a joining part that can be joined to the ring gear; and connection parts to which the axles are connected in such a manner as not to rotate in different manners.

JP 2009 001272 A, US 5 916 279 A and EP 0 683 091 A1 relate to lock devices suitable for a motorcycle. US 7 467 530 B2 discloses a vehicle brake-rotor lock including a mounting bracket and a lock mechanism.

### PRIOR ART DOCUMENT

### PATENT DOCUMENTS

Patent Document 1: JP-A 2000-274511

### SUMMARY OF INVENTION

### Technical Problem

When a screw is rotated in an attempt to remove the screw in a state where a vehicle under maintenance is lifted by a lift for maintenance or the like as described above, the axle may spin free with the rotation of the screw. For this reason, such a task requires two workers in total: a person who brakes to stop a disc brake connected to the axle, thereby preventing the axle from moving; and a person who removes the screw. This leads to low work efficiency.

An objective of the present invention is to provide a rotation restriction mechanism for maintenance which makes it possible to efficiently insert and remove screws in a device or the like connected to an axle of a vehicle.

### Solution to Problem

The rotation restriction mechanism for maintenance according to the present invention is adapted to be mounted to a disc brake which operates such that brake pads of a brake caliper are pressed against a disc rotor which rotates with an axle, thereby regulating the rotation of the disc rotor, and the rotation restriction mechanism for maintenance is provided with a connection part adapted to be connected by screwing to a screw connection member which is provided radially inward of the brake caliper and protrudes from the disc rotor; and a regulation part which extends radially outward from the connection part and, when the disc rotor rotates, is brought into contact with the brake caliper to prevent the rotation of the disc rotor. In the disc rotor, an outer peripheral section which is a radially outer section and on which the brake caliper is disposed is thinner than an inner peripheral section which is a radially inner section and on which the connection part is disposed, and the regulation part comprises an extending portion extending radially outward from the connection part; and a leg portion extending from an end part of the extending portion to reach the outer peripheral section.

In the rotation restriction mechanism for maintenance according to the present invention, the extending portion preferably comprises a connection part-side through hole formed at a position corresponding to the connection part; and a leg portion-side through hole formed at a position corresponding to the leg portion, the connection part preferably comprises a connection part-side rotation shaft portion which is inserted into and rotatably connected to the connection part-side through hole, and the leg portion preferably comprises a leg portion-side rotation shaft portion which is inserted into and rotatably connected to the leg portion-side through hole.

### ADVANTAGEOUS EFFECTS OF INVENTION

The rotation restriction mechanism for maintenance according to the present invention is brought into contact with a brake caliper when a disc rotor rotates, thereby preventing the disc rotor from rotating. This enables a screw or the like of a device or the like connected to an axle of a vehicle to be inserted and removed by only one worker.

### BRIEF DESCRIPTION OF THE DRAWINGS

Fig. 1 shows a schematic view illustrating a rotation restriction mechanism for maintenance according to an embodiment of the present invention.
Fig. 2 shows a schematic view illustrating a drive system of a vehicle in the embodiment of the present invention.
Fig. 3 shows views illustrating the relationship between a tire and a disc brake of the vehicle in the embodiment of the present invention.
Fig. 4 shows views in which the rotation restriction mechanism for maintenance according to the embodiment of the present invention is mounted to the disc brake.

### DESCRIPTION OF EMBODIMENTS

The following illustrates an embodiment of the present invention in detail with reference to the attached drawings. In all the figures of the drawings, the same elements are assigned the same reference numerals to omit redundant explanation. In the description below, the same reference numerals as previously denoted are used as necessary.

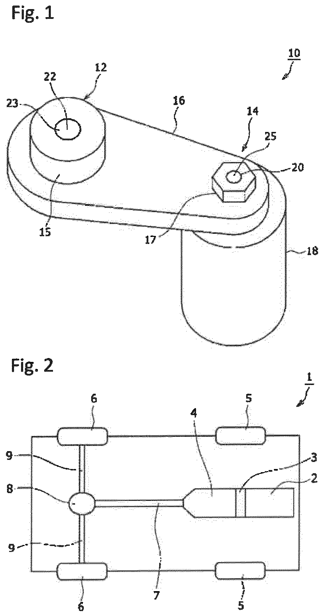

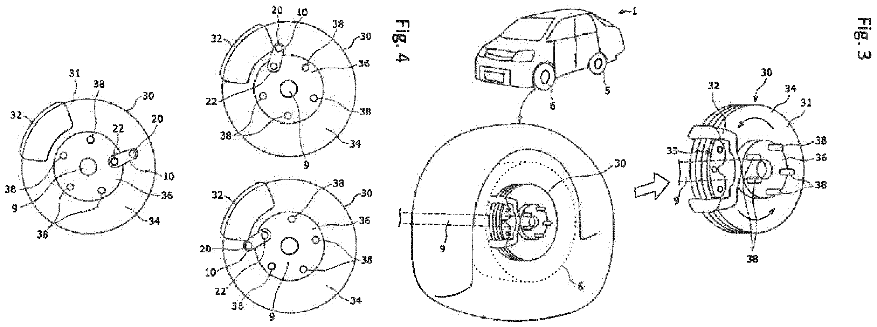

Fig. 1 shows a schematic view illustrating a rotation restriction mechanism 10 for maintenance. Fig. 2 shows a schematic view illustrating a drive system of a vehicle 1. Fig. 3 shows views illustrating the relationship between a tire part 6 and a disc brake 30 of the vehicle 1. Fig. 4 shows views in which the rotation restriction mechanism 10 for maintenance is mounted to the disc brake 30.

The rotation restriction mechanism 10 for maintenance is a device for use during maintenance of the vehicle 1. The following starts with a description of the vehicle 1, which is not a constituent component of the rotation restriction mechanism 10 for maintenance but is an essential component for the description of the embodiment according to the present invention.

As shown in Fig. 2, the vehicle 1 is provided with an engine (internal combustion engine) 2; a clutch 3 for allowing and blocking the transmission of power generated by the engine 2; and a transmission 4 for transmitting the power transmitted via the clutch 3 to a propeller shaft 7 while changing the torque, the rotational speed, and the rotation direction.

The vehicle 1 is further provided with the propeller shaft 7 which rotates to transmit the power output from the transmission 4; a differential 8 which is a device for detecting the difference in movement between two parts or distributing different levels of power; and axles 9 which are connected to the differential 8 connected to left and right tire parts 6.

The relationship between an axle 9 and a tire part 6 is described with reference to Fig. 3. The tire part 6 comprises a tire mounted to a wheel part which is connected to the disc brake 30 connected to the axle 9. In this structure, the axle 9 is rotated by power transmitted from the engine 2 to rotate the tire part 6, thereby enabling the vehicle 1 to run.

As shown in Fig. 3, the disc brake 30 is a rotating body which is a substantially protruding body when viewed in a side view. The disc brake 30 operates such that brake pads 33 of a brake caliper 32 are pressed against a disc rotor 31 which rotates with the axle 9, thereby regulating the rotation of the disc rotor 31.

The disc rotor 31 is provided with an outer peripheral section 34 which is a radially outer section and on which the brake caliper 32 is disposed; and an inner peripheral section 36 which is thicker than the outer peripheral section 34 and forms a step.

The brake caliper 32 covers at least a portion of the outer peripheral section 34. The brake caliper 32 has an arc shape in a plan view as shown in Fig. 4, and has a recessed shape that covers an end portion of the outer peripheral section 34 in a side view. As shown in Fig. 4, there is a small distance between the brake caliper 32 and the inner peripheral section 36 in a plan view.

The inner peripheral section 36 has a plurality of connection members 38 connected to the wheel part (not shown), and the connection members 38 stand apart from one another at predetermined intervals. Each connection member 38 comprises a bolt part to which a nut part can be screwed. In the disc brake 30 having the above-described structure, when a brake on the driver side is stepped on, the brake pad 33 presses and regulates the disc rotor 31.

The rotation restriction mechanism 10 for maintenance comprises a connection part 12 and a regulation part 14. The regulation part 14, when mounted to the disc brake 30, extends radially outward from the connection part 12 and, when the disc rotor 31 rotates, is brought into contact with the brake caliper 32 to prevent the rotation of the disc rotor 31.

The regulation part 14 is provided with an extending portion 16 extending radially outward from the connection part 12; and a leg portion 18 extending from an end part of the extending portion 16 to reach the outer peripheral section 34. The extending portion 16 is a plate-like member which has a substantially rectangular shape having a predetermined thickness and round ends on both sides.

In the extending portion 16, a connection part-side through hole 15 is formed at a position corresponding to the connection part 12, and a leg portion-side through hole 17 is formed at a position corresponding to the leg portion 18.

The connection part 12 is connectable to a connection member 38 provided on the inner peripheral section 36. The connection part 12 is a member having a through hole into which the connection member 38 can be inserted; and a connection part-side rotation shaft portion 23 having a protruding shape which can be fitted into the connection part-side through hole 15, and includes a protruding section which is fitted into the connection part-side through hole 15, and therefore is rotatably connected thereto.

The leg portion 18 is a substantially weight-shaped member having a leg portion-side rotation shaft 25 which is inserted into and rotatably connected to the leg portion-side through hole 17. When the disc rotor 31 is rotated, the leg portion 18 is brought into contact with the brake caliper 32.

As described above, the extending portion 16, the connection part 12, and the leg portion 18 are individually rotatably connected to one another. The extending portion 16, the connection part 12, and the leg portion 18 may be made of a material having adequate strength, such as stainless steel, and the leg portion 18 may be made of a resin because it is contacted with the brake caliper 32.

Next, the effects of the rotation restriction mechanism 10 for maintenance having the above-described structure are described. In the process of maintenance of the vehicle 1, a screw or the like used at the joint between the axle 9 and the differential 8 need to be removed.

In conventional maintenance tasks, when a screw is rotated in a direction of removal, the axle 9 spins free with the rotation of the screw. This makes it impossible to remove the screw. This mechanism is described with reference to Fig. 4, for example, for ease of understanding. In a central part of the disc rotor 31, a connection member (e.g., a bolt and a nut) is connected to the axle 9. When this member is rotated in the direction of loosening, the disc rotor 31 and the axle 9 also rotate (spin free). It is also easily understood that even in the case where the screw is located at a position corresponding to a connection member 38, the disc rotor 31 and the axle 9 spin free as a result of an attempt to loosen the screw.

In the case of the screw or the like for the disc rotor 31, a rod member such as a wrench may be set on the corresponding connection member 38 to prevent the rotation of the disc rotor 31. This process, however, should be performed by one hand, and therefore is difficult to perform. Additionally, since the joint between the axle 9 and the differential 8 is located in a central part of the chassis of the vehicle 1, it is difficult in terms of the distance for one worker to loosen the screw in the central part of the vehicle while setting the wrench on the connection member 38 at an end part of the vehicle.

Therefore, two workers should work together: one of them rotates the screw at the joint between the axle 9 and the differential 8; and the other steps on the brake to prevent the rotation of the axle 9. However, by using the rotation restriction mechanism 10 for maintenance, this process can be performed by only one worker. The following provides a detailed description.

The leg portion 18 of the rotation restriction mechanism 10 for maintenance is placed on the outer peripheral section 34 while the wheel of the tire part 6 is removed and the connection members 38 are exposed. A connection portion 22 of the rotation restriction mechanism 10 for maintenance is inserted into one of the five connection members 38, and a nut part is fastened to connect them together. Thus, the rotation restriction mechanism 10 for maintenance is mounted as shown in the left view of Fig. 4.

Next, the screw at the joint between the axle 9 and the differential 8 is rotated. At first, the disc rotor 31 rotates with the axle 9 with the rotation of the screw. Then, as shown in the right view of Fig. 4, the leg portion 18 is brought into contact with the brake caliper 32.

In the rotation restriction mechanism 10, since the extending portion 16, the connection part 12, and the leg portion 18 are individually rotatable, the leg portion 18 is moved to a position at which the leg portion 18 is locked with the brake caliper 32, so that the leg portion 18 is caught by an end part at one side of the brake caliper 32.

In this state, even when the screw at the joint between the axle 9 and the differential 8 is rotated, the axle 9 does not rotate because the rotation of the disk rotor 31 is prevented. Therefore, the screw can be loosened and the connection between the axle 9 and the differential 8 can be released for maintenance.

When the screw is fastened to re-connect the axle 9 and the differential 8 after maintenance, the screw is rotated in a direction reverse from the direction of loosening. Although the disc rotor 31 also rotates in the same direction, the disc rotor 31 comes into contact with and is caught by an end at the other side of the brake caliper 32, which is the opposite side to the one side, as shown in the right view of Fig. 4.

In this state, since the rotation of the disc rotor 31 is prevented, the axle 9 also does not rotate even when the screw is fastened. Therefore, the screw can be screwed tightly. Thus, after the screw is fastened, the nut part is loosened, and the connection part 12 is removed to remove the rotation restriction mechanism 10 for maintenance.

Accordingly, by using the rotation restriction mechanism 10 for maintenance, the maintenance process, which has been performed by two workers, can be performed by only one worker. This beneficially improves the work efficiency.

Although for ease of understanding, some parts of the drive system in the vehicle 1 are omitted in the above description, the present invention is also effective in cases where other elements and devices are installed. For example, in a structure in which the axle 9 passes through the differential gear (differential 8) and a hub carrier (knuckle, spindle, bearing) to reach a wheel hub (nave) and the disc brake 30, when each of these components is removed/reinstalled, the axle 9 rotates in the same manner as described above. However, by using the rotation restriction mechanism 10 for maintenance, the maintenance task can be efficiently performed by only one worker.

### REFERENCE SIGNS LIST

- 1: Vehicle
- 2: Engine
- 3: Clutch
- 4: Transmission
- 6: Tire part
- 7: Propeller shaft
- 8: Differential
- 9: Axle
- 10: Rotation restriction mechanism for maintenance
- 12: Connection part
- 14: Regulation part
- 15: Connection part-side through hole
- 16: Extending portion
- 17: Leg portion-side through hole
- 18: Leg portion
- 22: Connection portion
- 23: Connection part-side rotation shaft portion
- 25: Leg portion-side rotation shaft portion
- 30: Disc brake
- 31: Disc rotor
- 32: Brake caliper
- 33: Brake pad
- 34: Outer peripheral section
- 36: Inner peripheral section
- 38: Connection member

## Claims

1. A rotation restriction mechanism (10) for maintenance,
wherein the rotation restriction mechanism for maintenance is adapted to be mounted to a disc brake (30) which operates such that brake pads (33) of a brake caliper (32) are pressed against a disc rotor (31) which rotates with an axle (9), thereby regulating the rotation of the disc rotor (31), the rotation restriction mechanism for maintenance
**characterized in that** it comprises:
a connection part (12) adapted to be connected by screwing to a screw connection member (38) which is provided radially inward of the brake caliper (32) and protrudes from the disc rotor (31); and
a regulation part (14) which extends radially outward from the connection part (12) and, when the disc rotor (31) rotates, is brought into contact with the brake caliper (32) to prevent the rotation of the disc rotor (31),
in the disc rotor (31), an outer peripheral section (34) which is a radially outer section and on which the brake caliper (32) is disposed is thinner than an inner peripheral section (36) which is a radially inner section and on which the connection part (12) is disposed, and
the regulation part (14) comprises:
an extending portion (16) extending radially outward from the connection part (12); and
a leg portion (18) extending from an end part of the extending portion (16) to reach the outer peripheral section (34).

2. The rotation restriction mechanism (10) for maintenance
according to claim 1, wherein the extending portion (16) comprises a connection part-side through hole (15) formed at a position corresponding to the connection part (12) and a leg portion-side through hole (17) formed at a position corresponding to the leg portion (18), the connection part (12) comprises a connection part-side rotation shaft portion (23) which is inserted into and rotatably connected to the connection part-side through hole (15) , and
the leg portion (18) comprises a leg portion-side rotation shaft portion (25) which is inserted into and rotatably connected to the leg portion-side through hole (17).

## Patentansprüche

1. Rotationsbeschränkungsmechanismus (10) für die Wartung,
wobei der Rotationsbeschränkungsmechanismus für die Wartung ausgelegt ist, an einer Scheibenbremse (30) montiert zu sein, die derart funktioniert, dass Bremsbeläge (33) eines Bremssattels (32) gegen einen Scheibenrotor (31) gedrückt werden, der mit einer Achse (9) rotiert, wodurch die Rotation des Scheibenrotors (31) reguliert wird,
wobei der Rotationsbeschränkungsmechanismus für die Wartung **dadurch gekennzeichnet ist, dass** er aufweist
ein Verbindungsteil (12), das ausgelegt ist, durch Verschrauben mit einem Schraubverbindungselement (38) verbunden zu sein, das radial innerhalb des Bremssattels (32) bereitgestellt ist und von dem Scheibenrotor (31) vorsteht; und
ein Regulierungsteil (14), das sich von dem Verbindungsteil (12) radial nach außen erstreckt und, wenn der Scheibenrotor (31) rotiert, mit dem Bremssattel (32) in Kontakt gebracht wird, um die Rotation des Scheibenrotors (31) zu verhindern,
in dem Scheibenrotor (31) ein Außenumfangsbereich (34), der ein radial äußerer Bereich ist und an dem der Bremssattel (32) angeordnet ist, dünner ist als ein Innenumfangsbereich (36), der ein radial innerer Bereich ist und an dem das Verbindungsteil (12) angeordnet ist, und
das Regulierungsteil (14) aufweist:
einen Verlängerungsabschnitt (16), der sich von dem Verbindungsteil (12) radial nach außen erstreckt; und
einen Schenkelabschnitt (18), der sich von einem Endteil des Verlängerungsabschnitts (16) erstreckt, um den Außenumfangsbereich (34) zu erreichen.

2. Rotationsbeschränkungsmechanismus (10) für die Wartung nach Anspruch 1,
wobei der Verlängerungsabschnitt (16) aufweist ein verbindungsteilseitiges Durchgangsloch (15), das an einer Position entsprechend dem Verbindungsteil (12) ausgebildet ist, und ein schenkelabschnittsseitiges Durchgangsloch (17), das an einer Position entsprechend dem Schenkelabschnitt (18) ausgebildet ist,
das Verbindungsteil (12) einen verbindungsteilseitigen Rotationswellenabschnitt (23) aufweist, der in das verbindungsteilseitige Durchgangsloch (15) eingeführt und damit rotierbar verbunden ist, und
der Schenkelabschnitt (18) einen schenkelabschnittsseitigen Rotationswellenabschnitt (25) aufweist, der in das schenkelabschnittsseitige Durchgangsloch (17) eingeführt und damit rotierbar verbunden ist.

## Revendications

1. Mécanisme de restriction de rotation (10) pour maintenance,
le mécanisme de restriction de rotation pour maintenance étant conçu pour être monté sur un frein à disque (30) fonctionnant de sorte que des patins (33) de frein d'un étrier (32) de frein soient pressés contre un rotor circulaire (31) tournant avec un essieu (9), régulant ainsi la rotation du rotor circulaire (31),
le mécanisme de restriction de rotation pour maintenance étant **caractérisé en ce qu'**il comprend :
une partie de liaison (12) conçue pour être reliée par vissage à un élément de liaison à vis (38) disposé radialement vers l'intérieur de l'étrier (32) de frein et faisant saillie à partir du rotor circulaire (31) ; et
une partie de régulation (14) s'étendant radialement vers l'extérieur à partir de la partie de liaison (12) et amenée, lorsque le rotor circulaire (31) tourne, à se mettre en contact avec l'étrier (32) de frein afin d'empêcher la rotation du rotor circulaire (31),
dans le rotor circulaire (31), une section périphérique externe (34), laquelle est une section radialement externe et sur laquelle l'étrier (32) de frein est disposé, est plus mince qu'une section périphérique interne (36), laquelle est une section radialement interne et sur laquelle la partie de liaison (12) est disposée, et
la partie de régulation (14) comprend :
une partie extensible (16) s'étendant radialement vers l'extérieur à partir de la partie de liaison (12) ; et
une partie patte (18) s'étendant à partir d'une partie d'extrémité de la partie extensible (16) afin d'atteindre la section périphérique externe (34).

2. Le mécanisme de restriction de rotation (10) pour maintenance selon la revendication 1,
dans lequel la partie extensible (16) comprend un trou traversant (15) côté partie de liaison, formé au niveau d'une position correspondant à la partie de liaison (12), et un trou traversant (17) côté partie patte, formé au niveau d'une position correspondant à la partie patte (18),
la partie de liaison (12) comprend une partie arbre de rotation (23) côté partie de liaison, laquelle est introduite dans le trou traversant (15) côté partie de liaison et reliée rotative audit trou, et
la partie patte (18) comprend une partie arbre de rotation (25) côté partie patte, laquelle est introduite dans le trou traversant (17) côté partie patte et reliée rotative audit trou.
